# EUROPEAN PATENT APPLICATION

(11) **EP 3 706 331 A1**
(43) Date of publication of application: **09.09.2020**
(21) Application number: 19382171.7
(22) Date of filing: 08.03.2019
(51) Int. Cl.: H04B 10/11, H04B 10/112, H04B 10/116

(54) **EXTERIOR AIRCRAFT LIGHTING SYSTEM**

(71) Applicant: Airbus Operations, S.L., 28906 Getafe (ES)
(72) Inventor: DE BROUWER, Gabrielle, 28906 Madrid (ES)

(57) **Abstract**

The invention refers to an exterior aircraft lighting system (1), comprising:
- an aircraft skin panel (2),
- a modulator (3) configured to perform pulse width modulation on an electrical signal (18) with an input data signal (8) containing the information of a first input data parameter (P1), to generate a pulse width modulated signal (9),
- a light emitter device (4) fed by the pulse width modulated signal (9) and configured to emit a pulsed light beam (7),
- a light receptor device (5),
- a demodulator (6) configured to demodulate a pulse width modulated signal to obtain an output data signal (11) containing the information of a second input data parameter (P2),
- wherein the modulator (3), the light emitter device (4), the light receptor device (5), and the demodulator (6) are embedded in at least one aircraft skin panel (2).

## Description

### Object of the invention

The present invention refers to an exterior aircraft lighting system for the transmission of information between aircrafts. More particularly, the invention is relative to a lighting system intended to be used in the frame of formation flights.

One object of the invention is to provide a lighting system that allows data exchange without compromising the secret and the safety of the operations by the use of non-detectable data exchange technologies.

Another object of the invention is to provide a lighting system for providing external illumination, capable of transmitting high speed transmission of data, suitable to be used in areas susceptible to electromagnetic interference, and that offers high transmission speeds.

### Background of the invention

Currently, LiFi ("Light Fidelity") technology is being developed as a wireless communication means using lights to transmit data. The concept is based on the use of the light flickering in a Pulse Width Modulation (PWM) mode (modulation of the light) to transmit a binary sequence that is then interpreted by a receptor as data. At present, LiFi exists in visible and infra-red wavelength, and can be transmitted via a LED bulb. It can be used between two objects that are in direct sight and distant of a few tenth of meters maximum.

On the other end, exterior lighting systems are used for illumination purposes. In the particular case of military aircrafts, exterior lights are being used to ease formation flights by providing a visual help to the pilot to position its plane with regards to the other. In formation fights, aircrafts can be a few meters apart and special care must be taken.

It would therefore be desirable to provide technical means that facilitate the manoeuvres in formation fights.

### Summary of the invention

The present invention overcomes the above mentioned drawbacks by providing an exterior aircraft lighting system that eases the manoeuvres in formation fights, at the same time that allows the transmission of information between the aircrafts.

The present invention refers to an exterior aircraft lighting system that comprises at least one aircraft skin panel, an emitting unit, and a receptor unit.

The emitting unit comprises an electric modulator and a light emitter device. The modulator is configured to perform pulse width modulation on an electrical signal with an input data signal containing the information of a first input data parameter to generate a pulse width modulated signal. The first input data parameter is related to aircraft data network information. The light emitter device is fed by the pulse width modulated signal of the modulator, and configured to emit a pulsed light beam.

The exterior aircraft lighting system further comprises a light receptor unit that comprises a light receptor device and an electro-optical demodulator. The light receptor device is configured to receive a light signal. The demodulator is in communication with the light receptor device, and is configured to demodulate a pulse width modulated signal to obtain an output data signal containing the information of a second input data parameter.

The modulator, the light emitter device, the light receptor device, and the demodulator are embedded in at least one aircraft skin panel.

This way, the invention provides a lighting system that uses wireless communication to transmit data (LiFi technology) between an emitter embedded in the skin panel of the aircraft, and a receptor embedded in the skin panel of the same or another aircraft. The use of this technology provides a visible light communication system capable of transmitting data at high speeds over the visible light spectrum, ultraviolet and infrared radiation.

This lighting system can be implemented for civil and military aircrafts used in formation flights provided that the distance between the aircrafts does not exceed the LiFi capability. This distance will depend on the type of data rate exchanged and the overall weather conditions, and will to be defined in the protocol of communications between the aircrafts.

Further, the lighting system of the invention allows safety increasing in the operations by using a non-detectable data exchange, since LiFi cannot be detected by a radar.

The lighting system is connected to the aircraft data networks, and the communication is bi-directional.

### Brief description of the drawings

For a better comprehension of the invention, the following drawings are provided for illustrative and non-limiting purposes, wherein:
Figure 1 shows a schematic view of an exterior aircraft lighting system, according to a preferred embodiment of the invention.
Figure 2 shows a perspective view of an aircraft including the exterior aircraft lighting system of the invention.

### Preferred embodiments of the invention

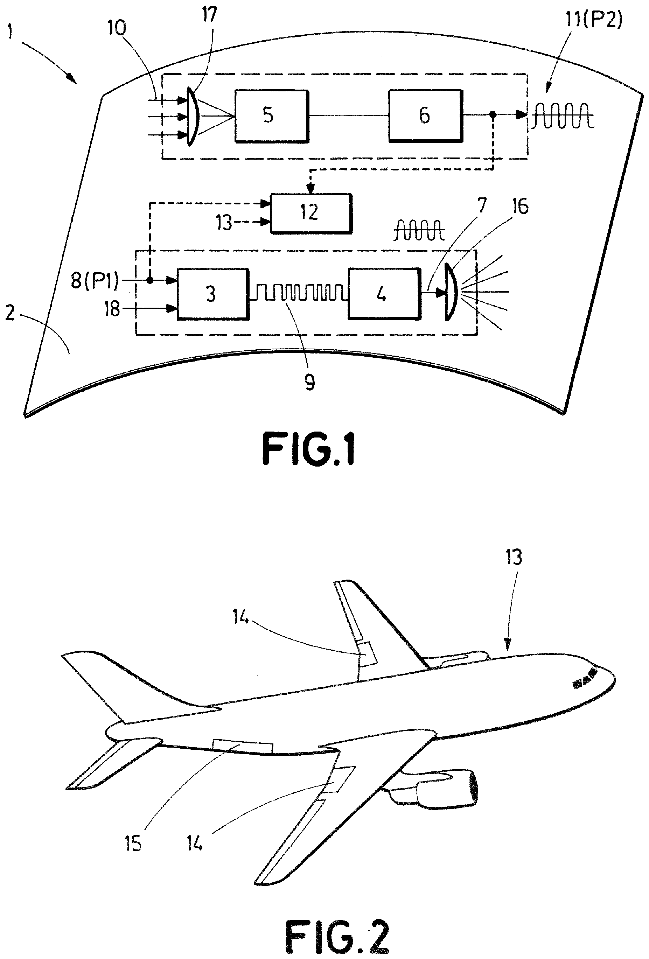

Figure 1 shows an exterior aircraft lighting system (1) comprising a light emitting unit, a light receptor unit, and an aircraft skin panel (2) on which the emitting and receptor units are mounted.

The light emitting unit comprises an electric modulator (3) and an electro-optical emitter device (4) and a first optical lens (16) to direct the beam in desired directions. The modulator (3) is configured to perform pulse width modulation on an electrical signal (18) -carrier signal- with an input data signal (8) containing the information of a first input data parameter (P1) related to aircraft data network information. Thus, the modulator (3) generates a pulse width modulated signal (9). The light emitter device (4) is fed by the pulse width modulated signal (9), and is configured to emit said pulse width modulated signal (9) as a pulsed light beam (7). The pulsed light beam (7) is received by the first optical lens (16) that directs the pulsed light beam (7) in desired multiple directions.

The light receptor unit comprises a second optical lens (17), a light receptor device (5), and an electro-optical demodulator (6). The second lens (17) permits to collimate incident light signals (10). The light receptor device (5) is configured to receive light signals (10), which may consist of a modulated light signal (9) sent by the same aircraft or by another aircraft, which can be the closest aircraft in a formation flight.

The electro-optic demodulator (6) is in communication with the light receptor device (5) and is configured to demodulate a pulse width modulated signal (10). This modulated signal (10) is generated and transmitted by the same or another aircraft, and is demodulated by the lighting system (1) of the same or another aircraft to obtain an electrical output data signal (11) containing the information of a second input data parameter (P2). If the lighting system is used in formation flights, this second input data parameter (P2) will be related to another aircraft, commonly, the closest aircraft position or attitude information.

At shown, the modulator (3), the light emitter device (4), the light receptor device (5), and the demodulator (6) are embedded in the same aircraft skin panel (2) but other alternatives can be implemented.

According to a preferred embodiment, the exterior aircraft lighting system (1) further comprises a data processing unit (12) that is configured to receive at least one of the following inputs: the input data signal (8) containing the information of a first input data parameter (P1), the output data signal (11) containing the information of a second input data parameter (P2), and aircraft data information (13). This possible inputs are shown by dashed lines in Figure 1. The data processing unit (12) is further configured to process at least one of said inputs.

According to a first preferred embodiment, the data processing unit (12) is configured to receive the input data signal (8) containing the information of a first input data parameter (P1), and the output data signal (11) containing the information of a second input data parameter (P2). In one case, the data processing unit (12) is configured to determine the relative position between aircrafts, when the information carried by the received output data signal (11) consists of another aircraft position information and the first input data parameter (P1) consists of the proper aircraft position. Alternatively, in another case, the data processing unit (12) is configured to determine the relative attitude between aircrafts, when the information carried by the received output data signal (11) consists of another aircraft attitude information and the first input data parameter (P1) consists of the proper aircraft attitude information.

According to a second preferred embodiment, the data processing unit (12) is configured to receive aircraft data information (13), and the output data signal (11) containing the information of a second input data parameter (P2). In such a case, the data processing unit (12) is configured to compare the second input data parameter (P2) with aircraft data network information (13). In one case, the second input data parameter (P2) may come from the proper aircraft, and then the exterior aircraft lighting system is being used as internal communication, i.e. between different parts of the same aircraft. And, in another case, the second input data parameter (P2) may come from a second aircraft, and then the exterior aircraft lighting system is being used for external communication, i.e. between different aircrafts.

According to another preferred embodiment, the light emitter device (3) is an incoherent light emitter device (3), and preferably, a LED. Alternatively, the light emitter device (3) is a coherent light emitter device (3), preferably a laser.

The aircraft panel (2) may be at least a part of a wing panel. Also, the aircraft panel (2) may be at least a part of a fuselage panel. Preferably, all the aircrafts of the formation flights will be equipped with emitting and receptor units on various areas of the aircraft, so that the exchange of data can be ensured for any positioning of the aircrafts.

Figure 2 shows an aircraft (13) including the exterior aircraft lighting system of the invention embedded in a wing skin panel (14) and in a fuselage skin panel (15).

## Claims

1. Exterior aircraft lighting system (1), comprising:
- at least one aircraft skin panel (2),
- a modulator (3) configured to perform pulse width modulation on an electrical power signal (18) with an input data signal (8) containing the information of a first input data parameter (P1) to generate a pulse width modulated signal (9), the first input data parameter (P1) related to aircraft data network information,
- a light emitter device (4) fed by the pulse width modulated signal (9) of the modulator (3) and configured to emit a pulsed light beam (7),
- a light receptor device (5) configured to receive a light signal (10),
- a demodulator (6) in communication with the light receptor device (5) and configured to demodulate a pulse width modulated signal to obtain an output data signal (11) containing the information of a second input data parameter (P2),
- wherein the modulator (3), the light emitter device (4), the light receptor device (5), and the demodulator (6) are embedded in at least one aircraft skin panel (2).

2. Exterior aircraft lighting system (1), according to claim 1, further comprising a data processing unit (12) configured to receive at least one of the following inputs:
- the input data signal (8) containing the information of a first input data parameter (P1),
- the output data signal (11) containing the information of a second input data parameter (P2),
- aircraft data information (13),
and wherein the data processing unit (12) is further configured to process at least one of said inputs.

3. Exterior aircraft lighting system (1), according to any preceding claims, wherein the first input data parameter (P1) contains aircraft position information.

4. Exterior aircraft lighting system (1), according to claims 2 and 3, wherein the data processing unit (12) is configured to determine the relative position between aircrafts, when the first input data parameter (P1) contains aircraft position information and the second input data parameter (P2) contains another aircraft position information.

5. Exterior aircraft lighting system (1), according to any preceding claims, wherein the first input data parameter (P1) contains aircraft attitude information.

6. Exterior aircraft lighting system (1), according to claims 2 and 5, wherein the data processing unit (12) is configured to determine the relative attitude between aircrafts, when the first input data parameter (P1) contains aircraft attitude information and the second input data parameter (P2) contains another aircraft attitude information.

7. Exterior aircraft lighting system (1), according to claim 2, wherein the data processing unit (12) is configured to compare the second input data parameter (P2) with aircraft data network information (13).

8. Exterior aircraft lighting system (1), according to any preceding claims, further comprising a first optical lens (16) placed to receive the pulsed light beam (7) emitted by the light emitter device (4) to direct the pulse width modulated signal (9) in desired directions.

9. Exterior aircraft lighting system (1), according to any preceding claims, further comprising a second optical lens (17) placed to receive light signals (10) and collimate them towards the light receptor device (5).

10. Exterior aircraft lighting system (1), according to any preceding claims, wherein the modulator (3) and the light emitter device (4) are embedded in one and the same aircraft skin panel (2), and the light receptor device (5) and the demodulator (6) are embedded in another aircraft skin panel (2').

11. Exterior aircraft lighting system (1), according to any preceding claims, wherein the light emitter device (3) is an incoherent light emitter device (3), preferably a LED.

12. Exterior aircraft lighting system (1), according to any of claims 1 to 8, wherein the light emitter device (3) is a coherent light emitter device (3), preferably a laser.

13. Exterior aircraft lighting system (1), according to any preceding claims, wherein the aircraft panel (2) is at least a part of a wing panel.

14. Exterior aircraft lighting system (1), according to any preceding claims, wherein the aircraft panel (2) is at least a part of a fuselage panel.

15. An aircraft (13) comprising an exterior aircraft lighting system (1) according to any of the preceding claims.
